# EUROPEAN PATENT SPECIFICATION

(11) **EP 3 403 320 B1**
(45) Date of publication and mention of the grant of the patent: **04.03.2020**
(21) Application number: 16700458.9
(22) Date of filing: 13.01.2016
(51) Int. Cl.: H02K 29/08

(54) **AUTOMOTIVE ELECTRIC FLUIDIC PUMP**
FLUIDPUMPE FÜR EIN ELEKTRISCHES AUTOMOBIL
POMPE FLUIDIQUE ÉLECTRIQUE D'AUTOMOBILE

(43) Date of publication of application: 21.11.2018
(73) Proprietor: Pierburg Pump Technology GmbH, 41460 Neuss (DE)
(72) Inventor: BÜRGER, Frank, 52379 Langerwehe (DE); SCHUMACHERS, Martin, 41366 Schwalmtal (DE); HAASE, Michael, 64711 Erbach (DE); SPIERTZ, Harald, 41812 Erkelenz (DE); SCHRÖDER, Viktor, 40878 Ratingen (DE); MALVASI, Alessandro, 57125 Livorno (IT); WULF, Andreas, 40549 Düsseldorf (DE)
(74) Representative: terpatent Patentanwälte ter Smitten Eberlein-Van Hoof Rütten Daubert
(86) International application number: PCT/EP2016/050553
(87) International publication number: WO 2017/121472

(56) References cited:
- EP-A1- 2 701 291
- EP-A1- 2 704 299
- WO-A2-2015/074914
- DE-A1- 2 918 329
- DE-A1- 3 434 965

## Description

The present invention refers to an automotive electric fluidic pump having a brushless and electronically commutated electric drive motor, which is provided with a plurality of Hall sensors for the accurate detection of the rotational rotor position.

The drive motor comprises a permanent-magnetic motor rotor rotating around a rotation axis and being provided with a plurality of rotor poles, a plurality of stator-sided electro-magnetic coils and a printed circuit board lying in a transversal plane. The drive motor further comprises at least two stator-sided Hall sensors arranged on the printed circuit board at a proximal side thereof and facing the motor rotor, wherein the Hall sensors are arranged eccentrically such that the Hall sensors detect the axial magnetic fields of the rotor poles. Furthermore, a ferromagnetic back iron member is provided at a distal side of the printed circuit board for a direct magnetic coupling of the Hall sensors with each other.

A respective automotive electric fluidic pump having a brushless and electronically commutated electric drive motor is known from prior art EP 2 701 291 A1. The position of the motor rotor is detected by three Hall sensors mounted on a PCB (printed circuit board), which are connected to three field conducting pins. An interference ring is mounted on a side of the PCB opposite to a side where the Hall sensors are provided to the PCB.

The exact detection of the rotational rotor position of the motor rotor of an automotive fluidic pump, which is driven by an electronically commutated drive motor is of great importance for safe and energy-efficient operation. An accurate control of the drive motor requires an exact detection of the rotational rotor position of the motor rotor. An accurate motor control avoids undesired operation states, such as start-up problems, the so-called toggling etc. Such undesired operation states especially can occur with displacement fluidic pumps because of a wide range of torques. Additionally, the total energy consumption is minimized by accurate timing of the commutation in the stator coils.

For accurate rotor position detection Hall sensors are used, which can be arranged axially of the motor rotor. The Hall sensors thereby detect the rotating magnetic fields passing by, which are generated by the rotor poles. The absolute field strength of the magnetic field of the rotor poles detected by the Hall sensor and the strength of interference fields are relevant for the accuracy of the rotor position detection with Hall sensors.

The object of the present invention is to provide an automotive electric fluidic pump having a brushless and electronically commutated electric drive motor, which detects the rotational rotor position more accurate and which can be manufactured more economically.

This object is solved by an automotive electric fluidic pump having the features of claim 1.

The automotive electric fluidic pump according to the invention provides a ferromagnetic back iron member, which directly magnetically couples the Hall sensors with each other. The ferromagnetic back iron member comprises axial protrusions respectively extending into openings of the printed circuit board. Each protrusion faces the corresponding Hall sensor. Thereby, the distance is minimized between the ferromagnetic sensor circuit member and the Hall sensors. The magnetic circuit for the magnetic fields emitted in an axial direction by the rotor poles is significantly improved, that is, the magnetic resistance is reduced in the Hall sensor circuit.

A magnetic gap is provided between the side of the Hall sensors and the rotor poles. The quality of the magnetic circuit is improved by means of the ferromagnetic back iron member. Thereby, the signal/noise ratio is increased significantly at each Hall sensor, so that the rotor position can be determined more accurately. Undesired operational states of the rotor can be avoided and the quality of the motor control can be reduced so that the motor control can be kept simple and cheap.

In a preferred embodiment of the present invention the ferromagnetic back iron member is fixed to the printed circuit board by soldering. Thereby the sensor circuit member can be connected easily and fast to the printed circuit board. Accordingly, the automotive electric fluidic pump can be manufactured more economically.

In a further preferred embodiment the ferromagnetic back iron member defines a closed ring lying in a transversal plane. The magnetic coupling of the Hall sensors and the ferromagnetic back iron member are improved by a closed ring. Accordingly, the magnetic resistance in the Hall sensor circle is decreased so that the signal quality is improved.

The ferromagnetic back iron member preferably defines a circular ring. Thereby a region in the middle of the circular ring is free so that a rotor shaft can extend through the ring.

Preferably field conducting pins are provided being arranged substantially axially and being assigned to each Hall sensor proximally. The Hall sensors therefore can be arranged remote with an axial distance from the motor rotor, so that the Hall sensors may be arranged together with the motor controller on a single printed circuit board. The proximal end of the field conducting pin is provided axially as close as possible to the motor rotor. The field conducting pin bundles and forwards the axial magnetic field of the rotor poles to the respective Hall sensor with relative low magnetic loss. The field conducting pin together with the ferromagnetic back iron member provides a low-loss magnetic circuit, which ensures a strong signal for the Hall sensors. Accordingly, the Hall sensors can be arranged remote from the stator-coils, so that the magnetic interferences caused by the magnetic coils are relatively small. Nevertheless, the signal is so high that the motor controller can have a relative simple design so that manufacturing cost can be saved.

According to a preferred embodiment of the present invention the ferromagnetic back iron member is a metal sheet body. A ferromagnetic back iron member made of a metal sheet body is cheap and can be processed easily by stamping and deep-drawing. Therefore the ferromagnetic back iron member can be manufactured economically.

Further, the protrusions are preferably made by deep-drawing and define proximal noses. No further element needs to be provided to the ferromagnetic back iron member. Accordingly, the ferromagnetic back iron member can be made out of a single piece. Thereby, some manufacturing steps can be saved. Thus, the ferromagnetic back iron member can be manufactured economically.

Furthermore, each protrusion has preferably an axial length of more than 80% of the thickness of the printed circuit board. According to the invention the axial length of the protrusions is the length of the protrusions extending into the openings. Thereby, the distance can be made small between the protrusion of the ferromagnetic back iron members and the Hall sensors so that the signal quality can be improved.

In a further preferred embodiment each protrusion has an outer diameter, which is at least 0,7mm smaller than the diameter of the corresponding opening in the printed circuit board. Thereby the ferromagnetic back iron member also can be mounted to the printed circuit board if the position of the openings does not exactly match with the positions of the protrusion. Thereby, the manufacturing tolerances can be less strict, so that the electric fluidic pump can be manufactured more economically.

Preferably, each protrusion is formed conically. According to the invention the diameter of the conical protrusion decreases with decreasing distance to the Hall sensors. In particular, protrusions are preferred, which are formed as truncated cones.

As a further preferred embodiment each protrusion is provided with a collar portion at a distal end thereof. A collar portion according to the invention is a ring-shaped portion, which surrounds the protrusions in a transversal plane. Thereby, the maximal depth of the protrusion protruding into the opening is limited. Thereby the final minimal distance between the protrusion and the Hall sensor is precisely adjusted.

Further advantages will become evident by the following detailed description of an embodiment of the invention in combination with the drawings, which show:
Figure 1 schematic presentation of an electrical automotive fluid pump comprising an electric drive motor and a pumping unit,
Figure 2 longitudinal section of the electric drive motor of the electrical automotive fluid pump shown in Fig. 1, and
Figure 3 top view on the printed circuit board comprising the ferromagnetic back iron member.

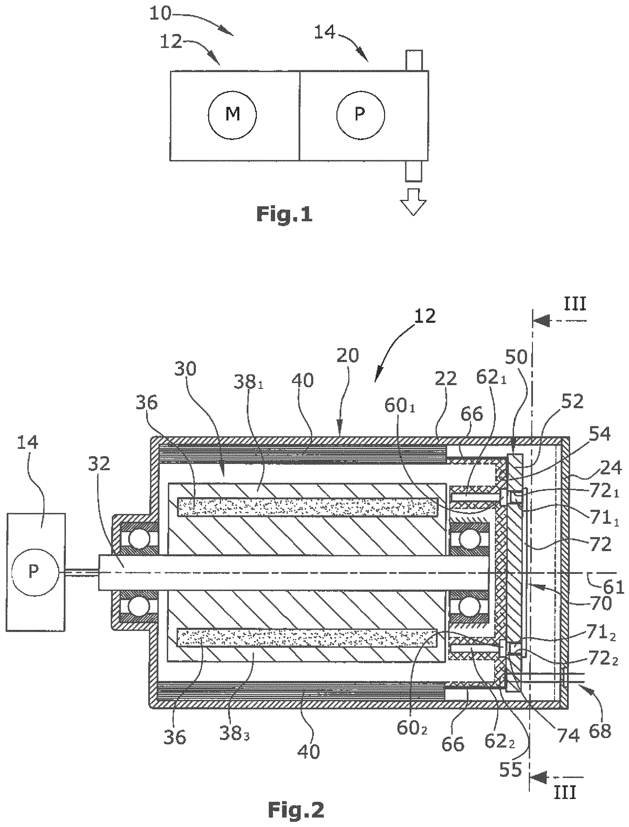

Figure 1 shows a schematic view of an electrical automotive fluid pump 10 comprising two modules, i.e. an electric drive motor 12 and a pumping unit 14. The pumping unit 14 can be a displacement pump, e.g. a vane pump, a rotary vane pump or a piston pump. The pumping unit 14 also could be a flow pump like e.g. centrifugal pump or an impeller pump.

Figure 2 shows a longitudinal section of the electric drive motor 12. The electric drive motor 12 is a brushless and electronically commutated drive motor 12. The drive motor 12 comprises a permanent-magnetically excited motor rotor 30 with four rotor poles 38₁-38₄, in each of which a permanent magnet 36 is embedded. Six electro-magnetic coils 40 are arranged on a stator side, which electro-magnetic coils 40 generate a rotating rotor magnetic field. The electro-magnetic coils 40 are arranged in a motor housing 20. The motor housing 20 is defined by a housing cup 22 and a housing cover 24. The motor rotor 30 comprises a motor shaft 32, which directly drives a pump shaft of the pumping unit 14.

A printed circuit board 50 is arranged at an axial end side of the drive motor 12, facing away from the pumping unit 14 and lying in a transversal plane. The printed circuit board 50 comprises a board body 52 having conductor paths 54 at a proximal side thereof. The proximal side of the board body 52 is the side axially facing the motor rotor 30. The distal side of the board body 52 is the side being axial more remote from the motor rotor 30. The control electronics and the power electronics of the motor control are both arranged on the proximal side of the board body 52. Further, three Hall sensors 60₁, 60₂, 60₃ are arranged on the proximal side of the board body 52. The Hall sensors 60₁, 60₂, 60₃ are arranged in approximately the same radius to a motor axis which is the rotation axis 61 as the permanent magnets 36 of the motor rotor 30.

The power electronics of the printed circuit board 50 is electrically connected to the electro-magnetic coils 40 by the conductor paths 54 and by axial connecting lines 66. Each Hall sensor 60₁, 60₂, 60₃ is respectively associated with a ferromagnetic axial field conducting pin 62₁, 62₂, 62₃, which is placed proximally to the respective Hall sensor 60₁, 60₂, 60₃. The proximal longitudinal ends of the axial field conducting pins 62₁, 62₂, 62₃ have only a small distance from the axially opposite end of the motor rotor 30.

A ferromagnetic back iron member 70 is arranged as shown in Figur 2 on the distal side of the printed circuit board 50. The ferromagnetic back iron member 70 is made of a one-piece body made of a ferromagnetic material and is soldered to the printed circuit board 50. The ferromagnetic back iron member 70 comprises three axial conically shaped protrusions 71₁, 71₂, 71₃ extending into corresponding openings 72₁, 72₂, 72₃ of the printed circuit board 50 so that each axial protrusion 71₁, 71₂, 71₃ axially faces a Hall sensor 60₁, 60₂, 60₃. A relatively small gap 74 is formed between the axial protrusion 71₁, 71₂, 71₃ and the respective Hall sensor 60₁, 60₂, 60₃.

Figure 2 further shows that the printed circuit board 50 including the control electronics, the Hall sensors 60₁, 60₂, 60₃ and the axial field conducting pins 62₁, 62₂, 62₃ are cast into a monolithic plastic casting 55. The conductor paths 54 of the printed circuit board 50 are connected to a motor plug 68 by connecting lines.

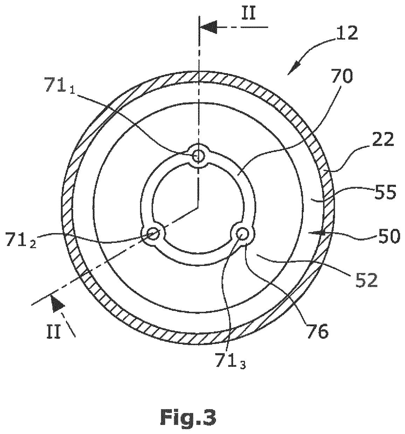

Figure 3 shows a top view on the printed circuit board 50 comprising the ferromagnetic back iron member 70. The ferromagnetic back iron member 70 is formed as a ring-shaped member. Each protrusion 71₁, 71₂, 71₃ is surrounded by a circular collar portion 76 lying in a transversal plane, both covering the opening 72₁, 72₂, 72₃.

As can be seen in figure 2, a magnetic circuit is formed by the ferromagnetic back iron member 70 on the distal side of the Hall sensors 60₁-60₃, the axial field conducting pins 62₁, 62₂, 62₃ proximal to the Hall sensors 60₁-60₃ and the ferromagnetic motor rotor 30. Therefore, the overall total magnetic resistance is low. The magnetic field generated by the rotor permanent magnets 36 generates a relatively high field strength in the region of the Hall sensors 60₁-60₃. As a result a high signal/noise ratio is present at the Hall sensors 60₁-60₃, which enables a series of constructive and conceptual simplifications, which reduce the electric power loss and simplify manufacturing.

### Reference signs

- 10: fluid pump
- 12: electric drive motor
- 14: pumping unit
- 22: housing cup
- 24: housing cover
- 30: motor rotor
- 32: motor shaft
- 36: permanent magnet
- 38₁-38₄: rotor poles
- 40: electro-magnetic coils
- 50: printed circuit board
- 52: board body
- 54: conductor path
- 55: monolithic plastic casting
- 60₁-60₃: Hall sensors
- 61: rotation axis
- 62₁-62₃: ferromagnetic axial field conducting pins
- 66: axial connecting line
- 68: motor plug
- 70: ferromagnetic back iron member
- 71₁-71₃: protrusions
- 72₁-72₃: openings
- 74: gap
- 76: collar portion

## Claims

1. An automotive electric fluidic pump (10) having a brushless and electronically commutated electric drive motor (12), the drive motor (12) comprising:
a permanent-magnetic motor rotor (30) rotating around a rotation axis (61) and being provided with a plurality of rotor poles (38₁, 38₂, 38₃),
a plurality of stator-sided electro-magnetic coils (40),
a printed circuit board (50) lying in a transversal plane,
at least two stator-sided Hall sensors (60₁, 60₂, 60₃) arranged on the printed circuit board (50) at a proximal side thereof and facing the motor rotor (30), wherein the Hall sensors (60₁, 60₂, 60₃) are arranged eccentrically such that the Hall sensors (60₁, 60₂, 60₃) detect the axial magnetic fields of the rotor poles, and a ferromagnetic back iron member (70) being provided at a distal side of the printed circuit board (50) for a direct magnetic coupling of the Hall sensors (60₁, 60₂, 60₃) with each other,
**characterized in that**
the ferromagnetic back iron member (70) comprises axial protrusions (71₁, 71₂, 71₃) respectively extending into openings (72₁, 72₂, 72₃) of the printed circuit board (50), and each protrusion (71₁, 71₂, 71₃) faces the corresponding Hall sensor (60₁, 60₂, 60₃).

2. The automotive electric fluidic pump (10) according to claim 1, **characterized in that** the ferromagnetic back iron member (70) is fixed to the printed circuit board (50) by soldering.

3. The automotive electric fluidic pump (10) according to claim 1 or 2, **characterized in that** the ferromagnetic back iron member (70) defines a closed ring lying in a transversal plane.

4. The automotive electric fluidic pump according to one of the preceding claims, **characterized in that** the ferromagnetic back iron member (70) defines a circular ring.

5. The automotive electric fluidic pump (10) according to one of the preceding claims, **characterized in that** field conducting pins (62₁, 62₂, 62₃) are provided being orientated substantially axially and being assigned to each Hall sensor (60₁, 60₂, 60₃) in proximal direction.

6. The automotive electric fluidic pump (10) according to one of the preceding claims, **characterized in that** the ferromagnetic back iron member (70) is a metal sheet body.

7. The automotive electric fluidic pump (10) according to one of the preceding claims, **characterized in that** the protrusions (71₁, 71₂, 71₃) are made by deep-drawing and define proximal noses.

8. The automotive electric fluidic pump (10) according to one of the preceding claims, **characterized in that** each protrusion (71₁, 71₂, 71₃) has an axial length of more than 80% of the thickness of the printed circuit board (50).

9. The automotive electric fluidic pump (10) according to one of the preceding claims, **characterized in that** each protrusion (71₁, 71₂, 71₃) has an outer diameter, which is at least 0,7mm smaller than the diameter of the corresponding opening (72₁, 72₂, 72₃) in the printed circuit board (50).

10. The automotive electric fluidic pump (10) according to one of the preceding claims, **characterized in that** each protrusion (71₁, 71₂, 71₃) is formed conically.

11. The automotive electric fluidic pump (10) according to one of the preceding claims, **characterized in that** each protrusion (71₁, 71₂, 71₃) is provided with a collar portion (76) at a distal end thereof.

## Patentansprüche

1. Elektrische Kraftfahrzeug-Fluidpumpe (10) mit einem bürstenlosen und elektronisch kommutierten elektrischen Antriebsmotor (12), wobei der Antriebsmotor (12) aufweist:
einen permanentmagnetischen Motorrotor (30), der sich um eine Drehachse (61) dreht und mit mehreren Rotorpolen (38₁, 38₂, 38₃) versehen ist,
mehrere statorseitige elektromagnetische Spulen (40),
eine in einer Querebene liegende Leiterplatte (50),
mindestens zwei statorseitige Hall-Sensoren (60₁, 60₂, 60₃), die auf der Leiterplatte (50) auf deren proximaler Seite angeordnet sind und dem Motorrotor (30) zugewandt sind, wobei die Hall-Sensoren (60₁, 60₂, 60₃) derart exzentrisch angeordnet sind, dass die Hall-Sensoren (60₁, 60₂, 60₃) die axialen Magnetfelder der Rotorpole detektieren, und
ein ferromagnetisches Rückschlusselement (70), das auf einer distalen Seite der Leiterplatte (50) vorgesehen ist, um die Hall-Sensoren (60₁, 60₂, 60₃) direkt magnetisch miteinander zu koppeln,
**dadurch gekennzeichnet, dass**
das ferromagnetische Rückschlusselement (70) axiale Vorsprünge (71₁, 71₂, 71₃) aufweist, die sich jeweils in Öffnungen (72₁, 72₂, 72₃) der Leiterplatte (50) erstrecken, und dass jeder Vorsprung (71₁, 71₂, 71₃) dem entsprechenden Hall-Sensor (60₁, 60₂, 60₃) zugewandt ist.

2. Elektrische Kraftfahrzeug-Fluidpumpe (10) nach Anspruch 1, **dadurch gekennzeichnet, dass** das ferromagnetische Rückschlusselement (70) an der Leiterplatte (50) durch Löten befestigt ist.

3. Elektrische Kraftfahrzeug-Fluidpumpe (10) nach Anspruch 1 oder 2, **dadurch gekennzeichnet, dass** das ferromagnetische Rückschlusselement (70) einen in einer Querebene liegenden geschlossenen Ring bildet.

4. Elektrische Kraftfahrzeug-Fluidpumpe nach einem der vorhergehenden Ansprüche, **dadurch gekennzeichnet, dass** das ferromagnetische Rückschlusselement (70) einen Kreisring bildet.

5. Elektrische Kraftfahrzeug-Fluidpumpe (10) nach einem der vorhergehenden Ansprüche, **dadurch gekennzeichnet, dass** feldleitende Stifte (62₁, 62₂, 62₃) vorgesehen sind, die im Wesentlichen axial ausgerichtet sind und jedem Hall-Sensor (60₁, 60₂, 60₃) in proximaler Richtung zugeordnet sind.

6. Elektrische Kraftfahrzeug-Fluidpumpe (10) nach einem der vorhergehenden Ansprüche, **dadurch gekennzeichnet, dass** das ferromagnetische Rückschlusselement (70) ein Metallblechkörper ist.

7. Elektrische Kraftfahrzeug-Fluidpumpe (10) nach einem der vorhergehenden Ansprüche, **dadurch gekennzeichnet, dass** die Vorsprünge (71₁, 71₂, 71₃) durch Tiefziehen hergestellt sind und proximale Nasen bilden.

8. Elektrische Kraftfahrzeug-Fluidpumpe (10) nach einem der vorhergehenden Ansprüche, **dadurch gekennzeichnet, dass** jeder Vorsprung (71₁, 71₂, 71₃) eine axiale Länge von mehr als 80% der Dicke der Leiterplatte (50) aufweist.

9. Elektrische Kraftfahrzeug-Fluidpumpe (10) nach einem der vorhergehenden Ansprüche, **dadurch gekennzeichnet, dass** jeder Vorsprung (71₁, 71₂, 71₃) einen Außendurchmesser aufweist, der mindestens 0,7 mm kleiner als der Durchmesser der entsprechenden Öffnung (72₁, 72₂, 72₃) in der Leiterplatte (50) ist.

10. Elektrische Kraftfahrzeug-Fluidpumpe (10) nach einem der vorhergehenden Ansprüche, **dadurch gekennzeichnet, dass** jeder Vorsprung (71₁, 71₂, 71₃) konisch ausgebildet ist.

11. Elektrische Kraftfahrzeug-Fluidpumpe (10) nach einem der vorhergehenden Ansprüche, **dadurch gekennzeichnet, dass** jeder Vorsprung (71₁, 71₂, 71₃) an seinem distalen Ende mit einem Kragenabschnitt (76) versehen ist.

## Revendications

1. Pompe fluidique électrique (10) pour automobiles avec un moteur d'entraînement électrique (12) sans balai et à commutation électronique, le moteur d'entraînement (12) comportant:
un rotor de moteur à aimant permanent (30) tournant autour d'un axe de rotation (61) et étant pourvu de plusieurs pôles de rotor (38₁, 38₂, 38₃),
plusieurs bobines électromagnétiques (40), côté stator,
une platine (50) située dans un plan transversal,
au moins deux capteurs de Hall (60₁, 60₂, 60₃), côté stator, disposés sur la platine (50) sur le côté proximal de celle-ci et faisant face au rotor du moteur (30), les capteurs à effet Hall (60₁, 60₂, 60₃) étant disposés de manière excentrique de sorte que les capteurs à effet Hall (60₁, 60₂, 60₃) détectent les champs magnétiques axiaux des pôles du rotor, et
un contre-fer ferromagnétique (70) est prévu sur le côté distal de la platine (50) pour un couplage magnétique direct des capteurs à effet Hall (60₁, 60₂, 60₃) entre eux,
**caractérisée en ce que** le contre-fer ferromagnétique (70) comprend des saillies axiales (71₁, 71₂, 71₃) s'étendant respectivement dans les ouvertures (72₁, 72₂, 72₃) de la platine (50), et que chaque saillie (71₁, 71₂, 71₃) fait face au capteur à effet Hall (60₁, 60₂, 60₃) correspondant.

2. Pompe fluidique électrique (10) pour automobiles selon la revendication 1, **caractérisée en ce que** le contre-fer ferromagnétique (70) est fixé à la platine (50) par soudage.

3. Pompe fluidique électrique (10) pour automobiles selon la revendication 1 ou 2, **caractérisée en ce que** le contre-fer ferromagnétique (70) forme un anneau fermé s'étendant dans un plan transversal.

4. Pompe fluidique électrique pour automobiles selon l'une quelconque des revendications précédentes, **caractérisée en ce que** le contre-fer ferromagnétique (70) forme un anneau circulaire.

5. Pompe fluidique électrique (10) pour automobiles selon l'une quelconque des revendications précédentes, **caractérisée en ce que** des broches conductrices de champ (62₁, 62₂, 62₃) sont prévues orientées sensiblement axialement et associées à chaque capteur à effet Hall (60₁, 60₂, 60₃) dans la direction proximale.

6. Pompe fluidique électrique (10) pour automobiles selon l'une quelconque des revendications précédentes, **caractérisée en ce que** le contre-fer ferromagnétique (70) est un corps en tôle.

7. Pompe fluidique électrique (10) pour automobiles selon l'une quelconque des revendications précédentes, **caractérisée en ce que** les saillies (71₁, 71₂, 71₃) sont réalisées par emboutissage et forment des nez proximaux.

8. Pompe fluidique électrique (10) pour automobiles selon l'une quelconque des revendications précédentes, **caractérisée en ce que** chaque saillie (71₁, 71₂, 71₃) a une longueur axiale supérieure à 80% de l'épaisseur de la platine (50).

9. Pompe fluidique électrique (10) pour automobiles selon l'une quelconque des revendications précédentes, **caractérisée en ce que** chaque saillie (71₁, 71₂, 71₃) a un diamètre extérieur inférieur d'au moins 0,7 mm au diamètre de l'ouverture correspondante (72₁, 72₂, 72₃) dans la platine (50).

10. Pompe fluidique électrique (10) pour automobiles selon l'une quelconque des revendications précédentes, **caractérisée en ce que** chaque saillie (71₁, 71₂, 71₃) est conique.

11. Pompe fluidique électrique (10) pour automobiles selon l'une quelconque des revendications précédentes, **caractérisée en ce que** chaque saillie (71₁, 71₂, 71₃) est munie d'une partie de collier (76) à son extrémité distale.
